# EUROPÄISCHE PATENTSCHRIFT

(11) **EP 3 080 822 B1**
(45) Veröffentlichungstag und Bekanntmachung des Hinweises auf die Patenterteilung: **18.10.2017**
(21) Anmeldenummer: 13811149.7
(22) Anmeldetag: 10.12.2013
(51) Int. Cl.: H01F 27/38

(54) **VORRICHTUNG UND VERFAHREN ZUR VERRINGERUNG EINES MAGNETISCHEN GLEICHFLUSS-ANTEILS IM KERN EINES DREIPHASENTRANSFORMATORS**
DEVICE AND METHOD FOR REDUCING A MAGNETIC UNIDIRECTIONAL FLUX COMPONENT IN THE CORE OF A THREE-PHASE TRANSFORMER
DISPOSITIF ET PROCÉDÉ VISANT À RÉDUIRE UNE COMPOSANTE DE FLUX MAGNÉTIQUE CONTINU DANS LE NOYAU D'UN TRANSFORMATEUR TRIPHASÉ

(43) Veröffentlichungstag der Anmeldung: 19.10.2016
(73) Patentinhaber: Siemens Aktiengesellschaft, 80333 München (DE)
(72) Erfinder: HAMBERGER, Peter, 4202 Kirchschlag bei Linz (AT)
(74) Vertreter: Maier, Daniel Oliver
(86) Internationale Anmeldenummer: PCT/EP2013/076095
(87) Internationale Veröffentlichungsnummer: WO 2015/086047

(56) Entgegenhaltungen:
- WO-A1-2005/001857
- WO-A1-2005/109593
- WO-A1-2012/041368

## Beschreibung

### Technisches Gebiet

Die Erfindung betrifft eine Vorrichtung zur Verringerung eines magnetischen Gleichfluss-Anteils im Kern eines Transformators umfassend
- zumindest eine Kompensationswicklung, welche magnetisch mit dem Kern des Dreiphasentransformators gekoppelt ist,
- eine Schalteinheit, welche elektrisch in einem Strompfad in Reihe mit der Kompensationswicklung angeordnet ist, um in die Kompensationswicklung einen Strom einzuspeisen, dessen Wirkung dem Gleichfluss-Anteil entgegengerichtet ist, und
- eine Einrichtung zur Strombegrenzung, welche elektrisch in einem Strompfad in Reihe mit der Kompensationswicklung angeordnet ist,
sowie ein Verfahren zum Betrieb einer solchen Vorrichtung.

### Stand der Technik

Bei elektrischen Transformatoren, wie sie in Energieverteilungsnetzen eingesetzt werden, kann es zu einer unerwünschten Einspeisung eines Gleichstroms in die Primärwicklung oder Sekundärwicklung kommen. Eine solche Gleichstromeinspeisung, im Folgenden auch als DC-Anteil bezeichnet, kann beispielsweise von elektronischen Baukomponenten herrühren, wie sie heutzutage bei der Ansteuerung von elektrischen Antrieben oder auch bei der Blindleistungskompensation verwendet werden. Eine andere Ursache können so genannte "Geomagnetically Induced Currents" (GIC) sein.
Ein DC-Anteil hat im Kern des Transformators einen Gleichfluss-Anteil zur Folge, der sich dem Wechselfluss überlagert. Dies führt zu einer unsymmetrischen Aussteuerung des magnetischen Werkstoffs im Kern und bringt eine Reihe von Nachteilen mit sich. Bereits ein Gleichstrom von wenigen Ampere kann eine lokale Erwärmung im Transformator verursachen, was die Lebensdauer der Wicklungsisolation beeinträchtigen kann. Ein weiterer unerwünschter Effekt ist eine erhöhte Geräuschemission bei Betrieb des Transformators, weil moderne Transformatorenkerne eine sehr hohe magnetische Leitfähigkeit haben, somit bereits geringe elektrische Gleichströme ausreichen, um den Transformatorkern in einer Halbperiode des Wechselstroms in Sättigung zu bringen.

Zur Verringerung des Betriebsgeräusches eines Transformators sind verschiedene aktiv und passiv wirkende Einrichtungen bekannt. Gemäß der WO 2012/041368 A1 wird eine in der Kompensationswicklung induzierte elektrische Spannung genutzt und für die Kompensation des störenden magnetischen Gleichfluss-Anteils herangezogen. Dabei wird mittels einer elektronischen Schalteinheit ein Kompensationsstrom erzeugt, wobei das Einschalten der Schalteinheit einer vorgegebenen Schaltstrategie folgt, etwa mittels einer Phasenanschnittsteuerung. Hier wird ein Thyristorschalter in Serie mit einer Strombegrenzungsdrossel geschaltet, um den Kompensationsstrom in die Kompensationswicklung einzubringen.

Aufgrund der genannten Maßnahmen sind die thermische Belastung der Wicklung des Transformators sowie die Verluste und Geräusche geringer. Die Vorrichtung zur Verringerung eines magnetischen Gleichfluss-Anteils lässt sich dabei mit vergleichsweise einfachen Mitteln unter Verwendung von diskreten und/oder programmierbaren Bausteinen realisieren. Für die Erzeugung des Kompensationsstroms ist kein Energiespeicher, wie beispielsweise eine Batterie oder ein Kondensator, erforderlich, die Energie zur Erzeugung des Kompensationsstroms wird direkt der Kompensationswicklung entnommen. Aufgrund ihrer Einfachheit ist die Zuverlässigkeit der Schaltungsanordnung hoch und für den wartungsarmen Langzeitbetrieb eines Transformators in einem Energieverteilungsnetz gut geeignet. Der Einsatzbereich umfasst sowohl Transformatoren im Nieder- oder Mittelspannungsbereich, wie auch Transformatoren sehr hoher Leistung (Leistungstransformatoren, HGÜ(Hochspannungs-Gleichstrom-Übertragungs)-Transformatoren). Weder die Baugröße noch sicherheitsrelevante Einrichtungen oder andere Auslegungskriterien des Transformators werden durch den Einsatz der Anlage ungünstig beeinflusst.

Damit die Vorrichtung zur Verringerung eines magnetischen Gleichfluss-Anteils mit kostengünstigen Standardbauteilen hergestellt werden kann und um mit dieser Vorrichtung innerhalb von behördlich vorgegebenen Spannungsgrenzwerten zu bleiben, etwa innerhalb der von der Niederspannungsrichtlinie (Richtlinie 2006/95/EG) festgelegten Spannungsgrenzen, ist die erlaubte induzierte Spannung in der Kompensationswicklung in der Praxis auf einen bestimmten Wert, im Fall der Niederspannungsrichtlinie auf 690 V, begrenzt.

Da die Windungsspannung einer bestehenden Kompensationswicklung mit der Nennleistung des Dreiphasentransformators steigt, muss daher die Windungszahl der Kompensationswicklung sehr klein gehalten werden. Dies kann bedeuten, dass mit diesen wenigen Windungen nur ein relativ schwaches Magnetfeld erzeugt werden kann, welches nicht zur nennenswerten Verringerung des magnetischen Gleichfluss-Anteils ausreicht. Würde man die Windungszahl der Kompensationswicklung erhöhen, würde man in manchen Anwendungsfällen die vorgegebene maximale Spannung überschreiten, die Vorrichtung zur Verringerung eines magnetischen Gleichfluss-Anteils dürfte dann nicht eingesetzt werden.

### Darstellung der Erfindung

Es ist eine Aufgabe der vorliegenden Erfindung, eine Vorrichtung zur Verringerung eines magnetischen Gleichfluss-Anteils im Kern eines Dreiphasentransformators zur Verfügung zu stellen, welche für eine gegebene Kompensationswicklung eine größere Verringerung eines magnetischen Gleichfluss-Anteils erlaubt.
Diese Aufgabe wird durch eine Vorrichtung mit den Merkmalen des Patentanspruchs 1 sowie durch ein Verfahren zum Betrieb einer solchen Vorrichtung mit den Merkmalen des Anspruchs 4 gelöst. Vorteilhafte Ausgestaltungen der Erfindung sind in den abhängigen Ansprüchen definiert.

Gemäß Anspruch 1 ist vorgesehen,
- dass zwei Kompensationswicklungen an jeweils unterschiedlichen Schenkeln des Kerns eines Dreiphasentransformators vorgesehen sind,
- dass die beiden Kompensationswicklungen zueinander in Reihe geschaltet sind,
- dass der Eingang der ersten sowie der Ausgang der zweiten Kompensationswicklung jeweils mit dem Eingang einer der beiden Wicklungen eines Einphasenstransformators verbunden ist,
- dass die Ausgänge der Wicklungen des Einphasenstransformators kurzgeschlossen sind und über die Schalteinheit mit der Verbindung zwischen Ausgang der ersten Kompensationswicklung und Eingang der zweiten Kompensationswicklung verbunden sind.
Dabei werden die beiden Wicklungen des Einphasenstransformators im Leerlauf (wenn die Schalteinheit den Strompfad zu den Kompensationswicklungen sperrt) als induktiver Spannungsteiler betrieben, während bei geschlossener Schalteinheit die beiden Wicklungen für die dann fließenden Kompensationsströme als Drossel fungieren. Im Vergleich zu einer einschlägigen Vorrichtung mit nur einer Kompensationswicklung können die beiden erfindungsgemäßen Kompensationswicklungen dann
- entweder gleich ausgeführt sein, wobei beiden Kompensationswicklungen dann die gleiche frühere Windungszahl haben, sodass insgesamt der Kern des Dreiphasentransformators mit einem größeren Kompensationsstrom versorgt wird als bei nur einer Kompensationswicklung,
- oder die beiden Kompensationswicklungen können eine geringere Windungsanzahl aufweisen, um dennoch den gleichen Kompensationsstrom zu erzielen, der mit einer einzigen Kompensationswicklung nach dem Stand der Technik erzielt wird.

Die beiden Kompensationswicklungen werden in der Regel gleich ausgebildet sein. Auch die beiden Wicklungen des Einphasentransformators werden in der Regel gleich ausgebildet sein, sie müssen jedenfalls die selbe Windungszahl aufweisen.

Die Schalteinheit kann zumindest einen Halbleiterschalter, bevorzugt einen Thyristor, enthalten. Der Vorteil der Verwendung eines Thyristors liegt darin, dass ein Thyristor mit einem Stromimpuls "gezündet", das heisst in den leitenden Zustand gebracht werden kann. Während der positiven Halbschwingung der Netzspannung hat der Thyristor bis zum nächsten Stromnulldurchgang die Eigenschaft einer Diode. Das Ende der Stromflussdauer wird vom Thyristor selbst bewirkt, indem der Haltestrom unterschritten wird und der Thyristor automatisch "löscht", das heißt in den nicht leitenden Zustand übergeht. Selbstverständlich sind auch andere Halbleiterschalter, wie GTO, IGBT Transistoren oder andere Schaltelemente denkbar.

Die Schalteinheit kann in vorteilhafter Weise mit einer Steuereinheit verbunden sein, welche mit einer Messeinrichtung zum Erfassen des magnetischen Gleichfluss-Anteils verbunden ist.

Eine Messeinrichtung zum Erfassen des magnetischen Gleichfluss-Anteils ist etwa aus der WO 2012/041368 A1 bekannt, welche dort einen magnetischen Nebenschluss-Teil mit einer Sensorspule umfasst. Der Nebenschluss-Teil ist am Kern des Transformators z.B. an einem Schenkel oder am Joch anliegend angeordnet, um einen Teil des magnetischen Flusses in einem Bypass zu führen. Aus diesem, im Nebenschluss geführten magnetischen Fluss, lässt sich mittels einer Sensorspule sehr leicht ein langzeitstabiles Sensorsignal gewinnen, welches ggf. nach einer Signalaufbereitung den Gleichfluss-Anteil (DC-Anteil) sehr gut abbildet. Das Messergebnis ist weitgehend frei von Drift und langzeitstabil. Da dieser Detektor im Wesentlichen aus dem Nebenschlussteil und der darauf angeordneten Sensorspule besteht, besitzt er eine hohe Zuverlässigkeit.

Das Sensorsignal von der Messeinrichtung zum Erfassen des magnetischen Gleichfluss-Anteils wird der Steuereinrichtung zugeführt. Dabei wird die Schalteinheit zum Beispiel mit einer Stellgröße gesteuert, welche von einem in der Steuereinrichtung vorhandenem Zeitglied vorgegeben wird, wobei das Zeitglied von einem Phasendetektor, welcher die Phase der in der Kompensationswicklung induzierten Spannung detektiert, getriggert wird. Das Zeitglied kann ein diskreter Bauteil oder Teil einer digitalen Schaltung sein. Es kann von Vorteil sein, wenn die Stellgröße das Ergebnis einer Rechenoperation eines Mikroprozessors ist. Der Mikroprozessor kann dabei gleichzeitig auch zur Signalaufbereitung des Sensorsignals verwendet werden. Die Schalteinheit kann etwa so angesteuert werden, dass in der Kompensationswicklung ein pulsierender Gleichstrom eingespeist wird. Dies hat den Vorteil, dass der arithmetische Mittelwert dieses pulsierenden Gleichstroms sehr einfach nach Maßgabe des zu kompensierenden DC-Anteils vorgegeben werden kann. Die elektronische Schalteinheit bleibt zwecks Reduktion der in der Induktivität gespeicherten magnetischen Energie sinnvoller Weise solange eingeschaltet, bis der pulsierende Gleichstrom abgeklungen ist. Somit hat ein Überspannungsschutz nach dem Ausschalten der elektrischen Schalteinheit faktisch keine in der Spule gespeicherte magnetische Restenergie zu absorbieren.

Es kann günstig sein, wenn die Schalteinheit und die Steuereinrichtung außerhalb des Kessels eines Transformators angeordnet wird. Die gesamte elektronische Schaltung ist dadurch von außen für Kontrolle und Wartung zugänglich.

Das erfindungsgemäße Verfahren zum Betrieb einer Vorrichtung sieht vor, dass die Steuereinheit ein Zeitglied umfasst, welches von einem Phasendetektor getriggert wird, welcher die Phase der in den Kompensationswicklungen induzierten Spannung detektiert und die Schalteinheit so ansteuert, dass in die Kompensationswicklungen ein pulsierender Gleichstrom eingespeist wird, was dem Verfahren nach der WO 2012/041368 A1 entspricht.
Kurzbeschreibung der Figuren Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Es zeigen:
Figur 1 eine schematisch dargestellte erfindungsgemäße Vorrichtung,
Figur 2 ein Vektordiagramm mit den in der Vorrichtung nach Fig. 1 auftretenden Spannungen.

### Ausführung der Erfindung

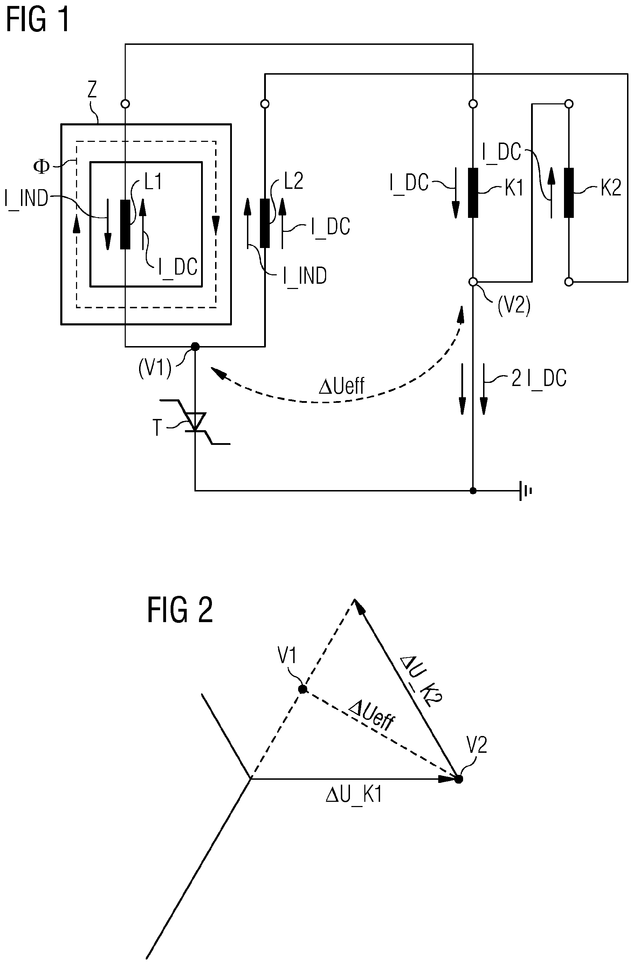

Die erfindungsgemäße Vorrichtung besteht gemäß Fig. 1 im Wesentlichen aus zwei Kompensationswicklungen K1 und K2, wobei jede um einen anderen Schenkel eines Dreiphasentransformators gewickelt ist. So kann z.B. eine Kompensationswicklung um einen äußeren Schenkel, die andere um den mittleren Schenkel gewickelt sein. Die Kompensationswicklungen K1, K2 sind somit im Transformatorkessel untergebracht und mit dem Kern des Transformators magnetisch gekoppelt. K1 und K2 weisen jeweils nur wenige, in der Regel weniger als zehn, Windungen auf. Der Einphasentransformator mit seinen beiden Wicklungen L1, L2 wird ebenfalls im Transformatorkessel des Dreiphasentransformators angeordnet.

Bei Betrieb des Transformators wird in den Kompensationswicklungen K1, K2 eine elektrische Spannung induziert, die gemäß der Erfindung dazu genutzt wird, den störenden Gleichanteil des magnetischen Flusses im Kern zu bekämpfen. Dies erfolgt durch netzgeführtes Schalten einer Schalteinheit T, die hier als Thyristor ausgebildet ist. Die Schalteinheit T ist elektrisch in Reihe mit den Kompensationswicklungen K1, K2 angeordnet, um in die Kompensationswicklungen K1, K2 einen Kompensationsstrom I_DC einzuspeisen, dessen Wirkung dem Gleichfluss-Anteil entgegengerichtet ist.

Die beiden Kompensationswicklungen K1, K2 sind zueinander in Reihe geschaltet, wobei der Ausgang der ersten K1 mit dem Eingang der zweiten Kompensationswicklung K2 verbunden ist. Der Eingang der ersten K1 sowie der Ausgang der zweiten Kompensationswicklung K2 sind jeweils mit dem Eingang einer der beiden Wicklungen L1, L2 des Einphasenstransformators verbunden. Die Ausgänge der Wicklungen L1, L2 des Einphasenstransformators sind im Knotenpunkt (V1) kurzgeschlossen und über die Schalteinheit T mit dem Knotenpunkt (V2) also der der Verbindung zwischen Ausgang der ersten Kompensationswicklung K1 und Eingang der zweiten Kompensationswicklung K2, verbunden. Das Potential des Knotenpunkts (V2) wird auf Erde gelegt.

Die beiden Wicklungen L1, L2 des Einphasenstransformators haben einen gemeinsamen Kern, der hier als Zweischenkelkern Z ausgeführt ist, mit je einer der Wicklungen L1, L2 auf einem Schenkel.

Die induzierte Spannung zwischen dem Eingang der ersten Kompensationswicklung K1 und dem Ausgang der zweiten Kompensationswicklung K2 entspricht der Summe der in den beiden Wicklungen K1, K2 induzierten Spannungen ΔU_K1, ΔU_K2, siehe Fig. 2. Die beiden Wicklungen L1, L2 arbeiten - wenn die Schalteinheit T sperrt - als Einphasentransformator im Leerlauf, in welchem gemäß der angelegten Spannung ein Wechselfluss erregt wird und ein entsprechender induzierter Strom I_IND fließt. An den Verbindungen der beiden Wicklungen L1, L2, also im Knotenpunkt (V1), stellt sich die halbe Spannung ein. Damit ergibt sich ein zwischen dem Potential V1 am Knotenpunkt (V1) und dem Potential V2 am Knotenpunkt (V2) effektiver Potentialunterschied ΔUeff von 0,886 der induzierten Spannung ΔU_K1 bzw. ΔU_K2. Diese Spannung liegt auch an der Schalteinheit T an und ist die dimensionierende Spannung für die Anzahl der Windungen in den Kompensationswicklungen K1, K2, die etwa für Anwendungen in der EU maximal 690V betragen darf.

Öffnet nur die Schalteinrichtung T, zündet also in diesem Fall der Thyristor, so beginnt der Kompensationsstrom I_DC zu fließen. Dieser hat keine zusätzliche magnetisierende Wirkung auf den Kern des Einphasentransformators, wodurch die beiden Wicklungen L1, L2 als Drossel wirken und daher als Strombegrenzungsdrossel fungieren. Wegen der Serienschaltung der Kompensationswicklungen K1, K2 addieren sich bezüglich des Kerns des Dreiphasentransformators die eingebrachten sogenannten "Amperewindungen", also die magnetische Durchflutung des Kerns. Der Kompensationsstrom I_DC wirkt also nicht nur in einer Kompensationswicklung auf den Kern, wie bei vielen herkömmlichen Anlagen, sondern in zwei Kompensationswicklungen K1, K2.

Wird also zu einer bestehenden Kompensationswicklung K1 eine zweite identische Kompensationswicklung K2 zusätzlich verbaut, so liegt an der Schalteinheit T nur eine effektive Spannung von 0,886 jener induzierten Spannung an, die bei der Ausführung mit nur einer Kompensationswicklung anliegen würde. Es könnten diese beiden erfindungsgemäßen Kompensationswicklungen K1, K2 somit entweder bei Dreiphasentransformatoren mit einer dimensionierenden Windungsspannung größer 690V, nämlich bis 800V, verwendet werden. Oder es könnte die Windungszahl der Kompensationswicklungen K1, K2 bis um den Faktor 2,31 erhöht werden, ohne die maximale Windungsspannung zu überschreiten.

Die Steuerung der Schalteinheit T kann wie in der WO 2012/041368 A1 erfolgen: die Steuereinheit besteht im Wesentlichen aus einem Phasendetektor und einem Zeitglied. Der Phasendetektor, z.B. ein Nulldurchgang-Detektor, leitet aus der induzierten Spannung ein Triggersignal ab, welches einem Zeitglied zugeführt wird. Zusammen mit einem ebenfalls der Steuereinheit zugeführten Steuersignal stellt die Steuereinheit ausgangsseitig eine Stellgrösse bereit, welche der elektronischen Schalteinheit T zugeleitet wird. Die Induktivitäten der Wicklungen L1, L2 sind dabei so bemessen, dass bei einem Durchschalten der Schalteinheit T ein in eine Stromrichtung fließender, pulsierender Stromverlauf in die Kompensationswicklungen K1, K2 eingespeist wird.

Dieser pulsierende Gleichstrom besteht aus der Überlagerung von zwei Halbwellen aus den induzierten Spannungen sowie einer dazwischen liegenden Stromlücke. Dabei wird die Schalteinheit T am Ende des Gleichstrompulses in den stromlosen Zustand geschaltet, etwa, indem der Haltestrom des Thyristors unterschritten wird.

### Bezugszeichenliste:

- I_DC: Kompensationsstrom
- I_IND: induzierter Strom
- K1: erste Kompensationswicklung
- K2: zweite Kompensationswicklung
- L1: erste Wicklung des Einphasenstransformators
- L2: zweite Wicklung des Einphasenstransformators
- T: Schalteinheit (Thyristor)
- V1: Spannung (Potential) am Knotenpunkt zwischen erster und zweiter Wicklung des Einphasentransformators
- V2: Spannung (Potential) am Knotenpunkt zwischen erster und zweiter Kompensationswicklung
- (V1): Knotenpunkt zwischen erster und zweiter Wicklung des Einphasentransformators
- (V2): Knotenpunkt zwischen erster und zweiter Kompensationswicklung
- ΔUeff: Potentialdifferenz zwischen X1 und X2
- ΔU_K1: in K1 induzierte Spannung
- ΔU_K2: in K2 induzierte Spannung
- Z: Zweischenkelkern des Einphasentransformators

## Patentansprüche

1. Vorrichtung zur Verringerung eines magnetischen Gleichfluss-Anteils im Kern eines Transformators, umfassend
- zumindest eine Kompensationswicklung (K1, K2), welche magnetisch mit dem Kern des Transformators gekoppelt ist,
- eine Schalteinheit (T), welche elektrisch in einem Strompfad in Reihe mit der Kompensationswicklung (K1, K2) angeordnet ist, um in die Kompensationswicklung einen Strom (I_DC) einzuspeisen, dessen Wirkung dem Gleichfluss-Anteil entgegengerichtet ist, und
- eine Einrichtung zur Strombegrenzung (L1, L2), welche elektrisch in einem Strompfad in Reihe mit der Kompensationswicklung (K1, K2) angeordnet ist, **dadurch gekennzeichnet,**
- **dass** als Transformator ein Dreiphasentransformator vorgesehen ist,
- **dass** zwei Kompensationswicklungen (K1, K2) an jeweils unterschiedlichen Schenkeln des Kerns des Dreiphasentransformators vorgesehen sind,
- **dass** die beiden Kompensationswicklungen (K1, K2) zueinander in Reihe geschaltet sind,
- **dass** der Eingang der ersten (K1) sowie der Ausgang der zweiten (K2) Kompensationswicklung jeweils mit dem Eingang einer der beiden Wicklungen (L1, L2) eines Einphasenstransformators verbunden ist,
- **dass** die Ausgänge der Wicklungen des Einphasenstransformators (L1, L2) kurzgeschlossen sind und über die Schalteinheit (T) mit der Verbindung (X2) zwischen Ausgang der ersten Kompensationswicklung (K1) und Eingang der zweiten Kompensationswicklung (K2) verbunden sind.

2. Vorrichtung nach Anspruch 1, **dadurch gekennzeichnet, dass** die Schalteinheit (T) zumindest einen Halbleiterschalter, bevorzugt einen Thyristor, enthält.

3. Vorrichtung nach Anspruch 1 oder 2, **dadurch gekennzeichnet, dass** die Schalteinheit (T) mit einer Steuereinheit verbunden ist, welche mit einer Messeinrichtung zum Erfassen des magnetischen Gleichfluss-Anteils verbunden ist.

4. Verfahren zum Betrieb einer Vorrichtung nach Anspruch 3, **dadurch gekennzeichnet, dass** die Steuereinheit ein Zeitglied umfasst, welches von einem Phasendetektor getriggert wird, welcher die Phase der in den Kompensationswicklungen (K1, K2) induzierten Spannung detektiert und die Schalteinheit (T) so ansteuert, dass in die Kompensationswicklungen (K1, K2) ein pulsierender Gleichstrom eingespeist wird.

## Claims

1. Device for reducing a DC magnetic flux content in the core of a transformer, comprising
- at least one compensation winding (K1, K2), which is magnetically coupled to the core of the transformer,
- a switching unit (T), which is arranged electrically in a current path in series with the compensation winding (K1, K2) in order to feed a current (I_DC) into the compensation winding, the effect of said current being directed oppositely to the unidirectional flow component, and
- an apparatus for limiting current (L1, L2), which is arranged electrically in a current path in series with the compensation winding (K1, K2), **characterised in that**
- a three-phase transformer is provided as a transformer,
- two compensation windings (K1, K2) are provided on respective different legs of the core of the three-phase transformer,
- the two compensation windings (K1, K2) are connected in series to each other,
- the input of the primary (K1) and the output of the secondary (K2) compensation winding are each connected to the input of one of the two windings (L1, L2) of a single-phase transformer,
- the outputs of the windings of the single-phase transformer (L1, L2) are short-circuited and connected via the switching unit (T) to the connection (X2) between the output of the primary compensation winding (K1) and the input of the secondary compensation winding (K2).

2. Device according to claim 1, **characterised in that** the switching unit (T) comprises at least one semiconductor switch, preferably a thyristor.

3. Device according to one of claims 1 or 2, **characterised in that** the switching unit (T) is connected to a control unit, which is connected to a measuring apparatus for the acquisition of the magnetic unidirectional flux component.

4. Method for operating an apparatus according to claim 3, **characterised in that** the control unit comprises a timing element, which is triggered by a phase detector, which detects the phase of the voltage induced in the compensation windings (K1, K2) and controls the switching unit (T) such that a pulsating direct current is fed into the compensation windings (K1, K2).

## Revendications

1. Dispositif pour la réduction d'une composante magnétique continue dans le noyau d'un transformateur, comportant
- au moins un enroulement de compensation (K1, K2) qui est couplé magnétiquement au noyau du transformateur,
- une unité de commutation (T) qui est disposée dans un circuit de courant électrique en série avec l'enroulement de compensation (K1, K2) pour alimenter l'enroulement de compensation en courant (I_DC), dont l'action s'exerce à l'encontre de la composante continue, et
- un dispositif pour la limitation du courant (L1, L2) qui est disposé dans un circuit de courant électrique en série avec l'enroulement de compensation (K1, K2), **caractérisé**
- **en ce qu'**un transformateur triphasé est prévu en tant que transformateur,
- **en ce que** sont prévus deux enroulements de compensation (K1, K2), respectivement en deux différentes branches du noyau du transformateur triphasé,
- **en ce que** les deux enroulements de compensation (K1, K2) sont connectés en série l'un à l'autre,
- **en ce que** l'entrée du premier enroulement de compensation (K1) ainsi que la sortie du deuxième enroulement de compensation (K2) sont chacune reliées à l'entrée de l'un des deux enroulements (L1, L2) d'un transformateur monophasé,
- **en ce que** les sorties des enroulements du transformateur monophasé (L1, L2) sont court-circuitées et sont reliées par l'intermédiaire de l'unité de commutation (T) à la connexion (X2) entre la sortie du premier enroulement de compensation (K1) et l'entrée du deuxième enroulement de compensation (K2).

2. Dispositif selon la revendication 1, **caractérisé en ce que** l'unité de commutation (T) contient au moins un commutateur à semi-conducteur, de préférence un thyristor.

3. Dispositif selon la revendication 1 ou la revendication 2, **caractérisé en ce que** l'unité de commutation (T) est reliée à une unité de commande qui est reliée à un dispositif de mesure pour l'enregistrement de la composante magnétique continue.

4. Procédé pour le fonctionnement d'un dispositif selon la revendication 3, **caractérisé en ce que** l'unité de commande comporte un élément d'horloge qui est déclenché par un détecteur de phase qui détecte la phase de la tension induite dans les enroulements de compensation (K1, K2) et commande l'unité de commutation (T) de sorte qu'un courant impulsionnel continu soit injecté dans les enroulements de compensation (K1, K2).
